# EUROPEAN PATENT SPECIFICATION

(11) **EP 3 047 891 B1**
(45) Date of publication and mention of the grant of the patent: **21.07.2021**
(21) Application number: 15165371.4
(22) Date of filing: 28.04.2015
(51) Int. Cl.: B01D 35/157, B01D 29/07, B01D 29/52, B01D 35/147

(54) **FILTER**
FILTER
FILTRE

(30) Priority: 20.01.2015 US 201514600553
(43) Date of publication of application: 27.07.2016
(73) Proprietor: Filtran, LLC, Des Plaines, IL 60016 (US)
(72) Inventor: Khalil, Ibrahim, Lake Barrington, IL Illinois 60010 (US); Kondratyuk, Vasyl, Arlington Heights, 60004 (US)
(74) Representative: Richly & Ritschel Patentanwälte PartG mbB

(56) References cited:
- EP-A1- 1 733 775
- DE-U1- 20 006 981
- DE-U1-202015 101 114
- FR-A3- 2 989 444
- None

## Description

### BACKGROUND

The invention relates generally to the field of filtration. More specifically, some embodiments of the invention relate to filters that are used to filter liquids such as engine oil or transmission oil in engines such as vehicle engines.

Various filtration devices are known. More specifically, filtration devices are known that are used in engine and/or vehicle applications, for example in the filtration of automotive transmission fluid. Some devices provide a housing forming a chamber containing a filtration media such as, for example, a felt type media that is permeable to the fluid but traps particles or other contaminants. A disadvantage to some of these filters is that they employ only one type of media, which in certain circumstances can cause difficulty of the fluid flow when the fluid is cold because the fluid tends to be highly viscous and not pass through the filtration media in the same fashion as is desired when the fluid is warm. Another disadvantage of some transmission filters is that the surface area of a flat sheet of media is less than may be desired within a compact housing shape. Yet another disadvantage of certain types of filters is that they may employ the filter media being mounted by being crimped directly between upper and lower housings in order to ensure a sufficient seal around the periphery between the two housings and also with the filter media.

EP 1 733 775 A1 describes an oil filter device for filtering a fluid. The filter has at least one filtering medium and a bypass for the filtering medium. The filter also has an actuator which influences the flow of fluid through the bypass as a function of a predetermined parameter of the fluid. The actuator is controlled as a function of the viscosity of the fluid, a differential pressure of the fluid at the filtering medium, and/or the temperature of the fluid.

DE 200 06 981 U1 describes a filter device with at least two filters of different fineness connected in parallel, the at least one coarser filter being assigned a valve which opens when the flow through a finer filter falls below a defined amount, the filters being arranged in a housing in such a way that the liquid medium always flows against the finer filter, irrespective of the flow through them.

Accordingly, it would be desirable to have a filter device and method that can overcome any or some of the above-mentioned disadvantages.

### SUMMARY OF THE INVENTION

In light of the present need for filters such as transmission filters, a brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

In some aspects, a fluid filter apparatus comprises: an upper housing shell; a lower housing shell; a pleat pack element comprising a peripheral frame and a folded pleated media, wherein the frame is at least partially molded over at least some edges the media to secure the media in the frame, wherein the media comprises two types of media of different filtration densities from each other. A flow control element is disposed for changing the proportion of flow between the first media and the second media responsive to changes in at least one of temperature, pressure, flow rate, and/or viscosity of the fluid.

Moreover the object of the present invention is solved by a fluid filter apparatus as defined in claim 1.

The fluid filter apparatus according to the present invention overcomes the above mentioned disadvantages of the prior art fluid filter apparatuses.

Preferably, the flow controlling means is mounted to the pleat pack.

The corresponding fluid filter apparatus exhibits a very simple construction since the flow controlling means can be mounted to the pleat pack before upper housing shell and the lower housing shell are joined together with the pleat pack and the flow controlling means being positioned in the chamber defined by the upper housing shell and the lower housing shell.

More preferably, the flow controlling means is integral with a portion of the pleat pack.

The corresponding fluid filter apparatus exhibits an even simpler construction so that the assembling process is simplified.

The fluid filter apparatus further comprises a supplemental filter material disposed separate from the pleat pack, and having a media density different than the density of media in the pleat pack.

The corresponding fluid filter apparatus exhibits even better filter characteristics.

More preferably, the supplemental filter material is disposed adjacent the pleat pack and in the direction of fluid flow before the pleat pack.

The corresponding filter apparatus exhibits a simple construction and therefore is easy to assemble.

More preferably, the supplemental filter material comprises at least one aperture therethrough. As a matter of course the supplemental filter material can comprise a plurality of apertures therethrough.

The corresponding fluid filter apparatus can be easily adapted to the properties of the fluid to be filtered by adapting the number of apertures in the supplemental filter material.

The fluid filter apparatus can be assembled in that way that the upper housing shell and lower housing shell are joined to a frame of the pleat pack by one of vibration welding, laser welding, bonding, ultrasonic welding or infrared welding.

The flow controlling means is a flexible resilient member.

More preferably, the flow controlling means comprises a member having plurality of apertures.

### BRIEF DESCRIPTION OF THE DRAWINGS

In order to better understand various embodiments, reference is made to the accompanying drawings, wherein:
FIG. 1 is an exploded view of a filter according to a first embodiment.
FIG. 2 is a top view of the filter pack of FIG. 1.
FIG. 3 is a cross-sectional view of the filter of FIG. 1.
FIG. 4 is an exploded view of a filter according to a second embodiment.
FIG. 5 is a top view of the filter pack of FIG. 4.
FIG. 6 is a cross-sectional view of the filter of FIG. 4.
FIG. 7 is another cross-sectional view of the filter of FIG. 4.
FIG. 8 is an exploded view of a filter according to a third preferred embodiment.
FIG. 9 is a top view of the filter pack of FIG. 8
FIG. 10 is a cross-sectional view of the filter of FIG. 8.
FIG. 11 is another cross-sectional view of the filter of FIG. 8.
FIG. 12 is an exploded view of a filter according to a fourth embodiment.
FIG. 13 is a cross-sectional view of the filter of FIG. 12.
FIG. 14 is a cross-sectional view of a filter according to a fifth embodiment.
FIG. 15 is another cross-sectional view of the filter of FIG. 14.
FIG. 16 is a bottom view of the filter of FIG. 14.
FIG. 17 is a view of a pleat pack used in the filter of FIG. 14.
FIG. 18 is an exploded view of the filter of FIG. 14.
FIG. 19 is another cross sectional view of the filter of FIG. 14.

### DETAILED DESCRIPTION

Some embodiments of the present invention relate to filters, such as automotive transmission fluid filters. Some embodiments will now be described with reference to the drawing figures in which like numbers generally designate like parts throughout.

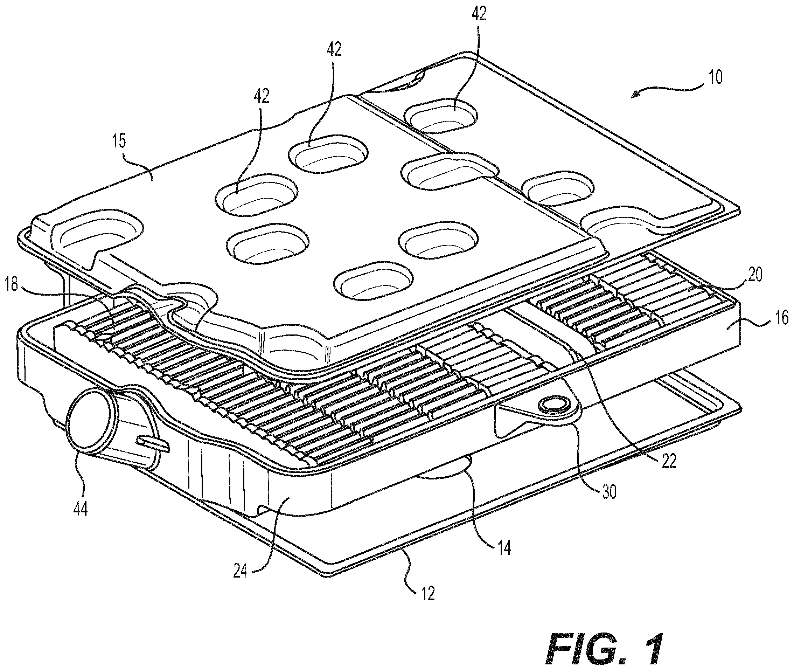

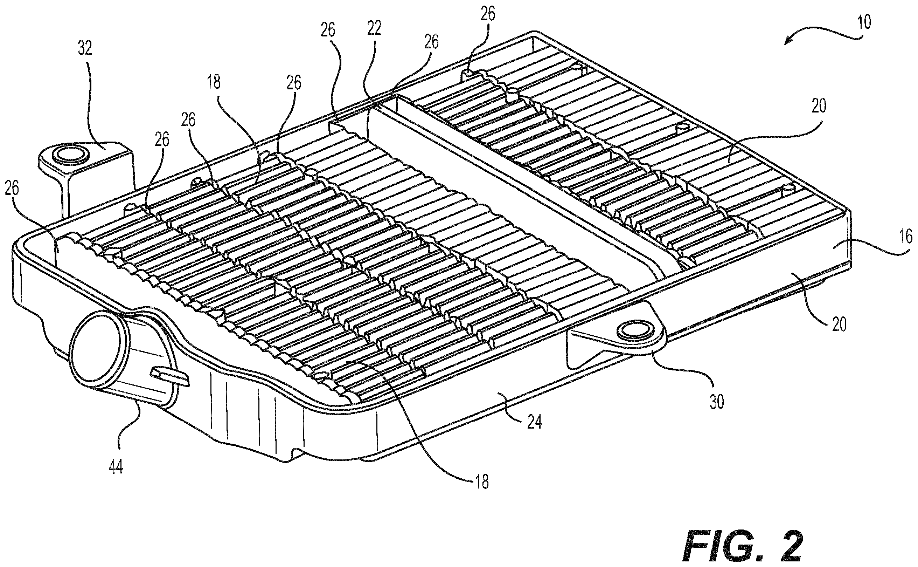

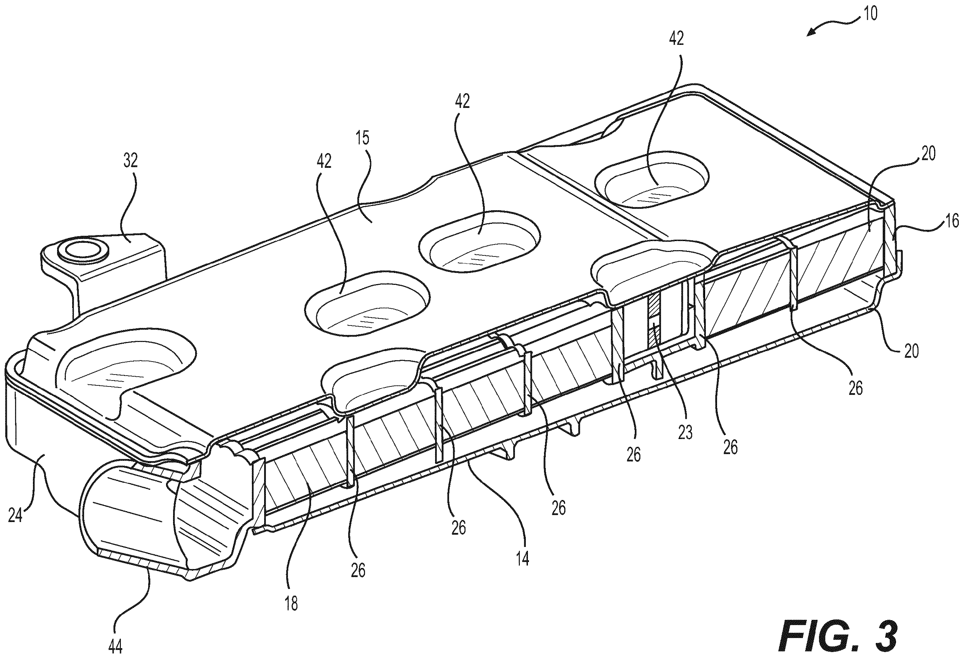

FIG. 1 is an exploded view of a filter according to a first preferred embodiment. FIG. 2 is a top view of the filter pack of FIG. 1. FIG. 3 is a cross-sectional view of the filter of FIG. 1.

A filter 10 includes a lower cover 12 having a fluid inlet opening 14. An upper cover 15 is provided. A filter pack 16 has a pleated first media 18 and a pleated second media 20. The media are separated by a flow control element 22. The flow control element 22 determines (along with the types and surface area of media as described below) the amount of fluid that will flow through each of the various media sections, as a function of temperature, viscosity and/or fluid pressure as described in more detail below. In this example the element 22 is passive, it is rigid and does not change configuration based on fluid pressure differential of fluid flowing through the filter 10; yet the small gaps for fluid it provides do control the ratio of fluid flow through the first media 18 and second media 20. In this example the element 22 (which may also be considered as a flow-restriction plate) is a vertical wall or web with one oe more controlled sized permanent holes 23 as seen best in FIG 3. The first media 18 and second media 20 can be any of a wide range of materials suitable for filtering the fluid such as for example vehicle transmission fluid. The media 18 and 20 can have different characteristics from each other such as for example density, efficiency and/or material type. The filter pack 16 has a surrounding housing portion 24 and transverse ribs 26, which may be integral with the housing portion 24. The media 18 and 20 can have the housing 24 and ribs 26 over-molded onto the media.

The housing 24 can be attached to the lower cover 12 and the upper cover 15 by one or more of vibration welding, laser welding, bonding, ultrasonic welding or infrared welding. The housing 24 can also have mounting bosses 30 and 32 for attachment of the filter 10 to a device such as a vehicle transmission. In this embodiment the lower cover 12 and upper cover 15 form a chamber that encloses the media types. The fluid outlet 44 is part of the housing 24. However, in other embodiments the fluid outlet 44 may be provided as an opening in the upper cover 15. Also, in other embodiments the lower cover 12 and upper cover 15 may be attached to each other and completely surround the pleat pack. The selection of the size, shape and total surface area of the holes in the element 22 affect the ratio of fluid flow between the two media. The selection of surface area of each media 18 and 20 will also be a factor in the relative flow amounts through each media in all embodiments. The top shell 15 may have stiffening and spacing dimples 42. The dimples 42 may also be arranged to correspond to bolt heads in the surrounding transmission components, this allowing a more compact mounting of the filter 10 adjacent the surrounding components. The housing 24 of the pack 16 also incorporates the fluid outlet 44. The top shell 15 and bottom shell 12 are attached, respectively, to the top and bottom of the housing portion 24 by suitable attachment, such as by one or more of vibration welding, laser welding, bonding, ultrasonic welding or infrared welding.

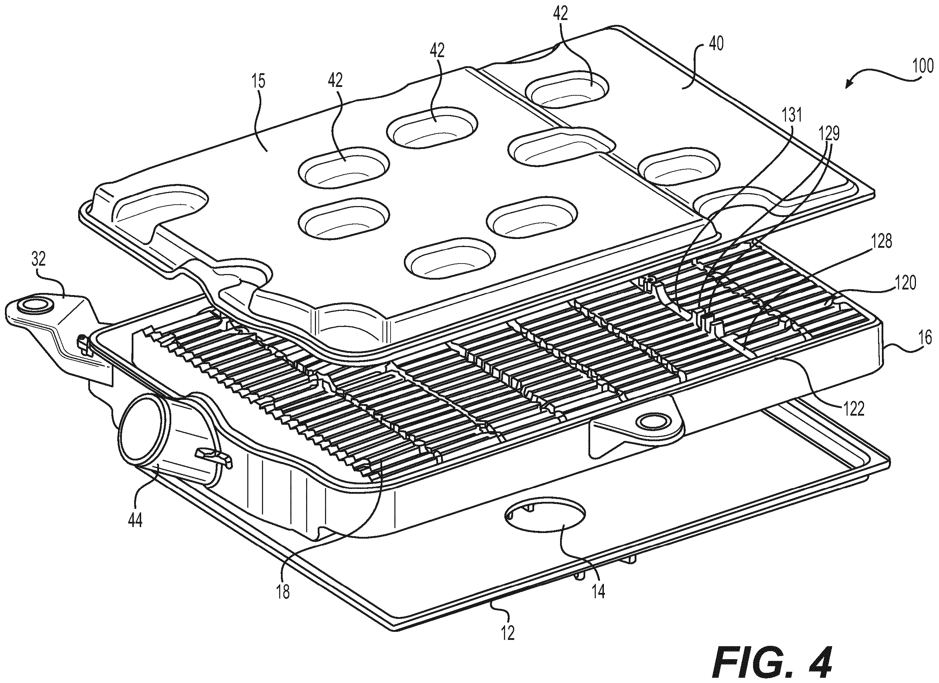

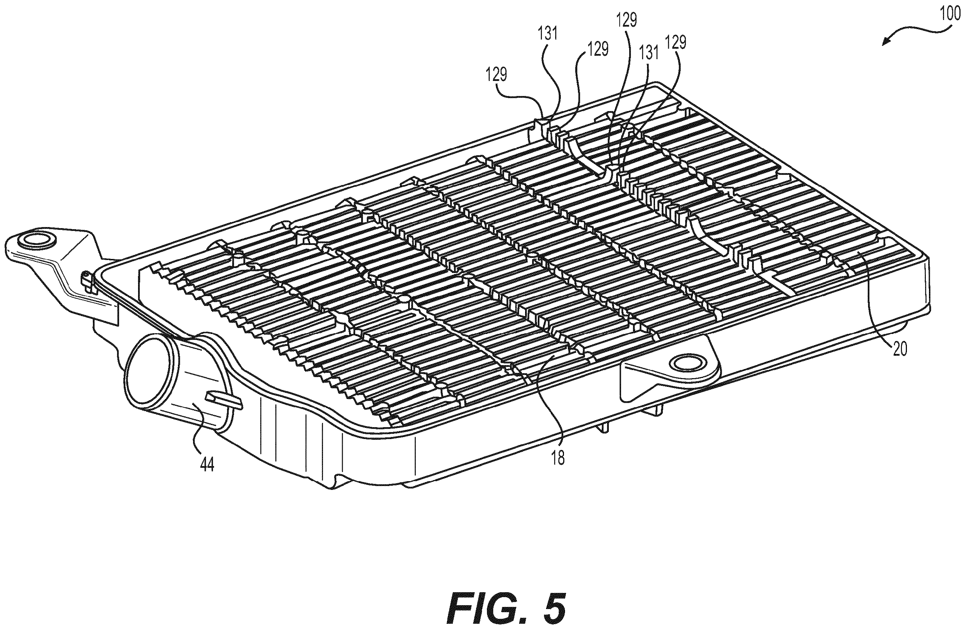

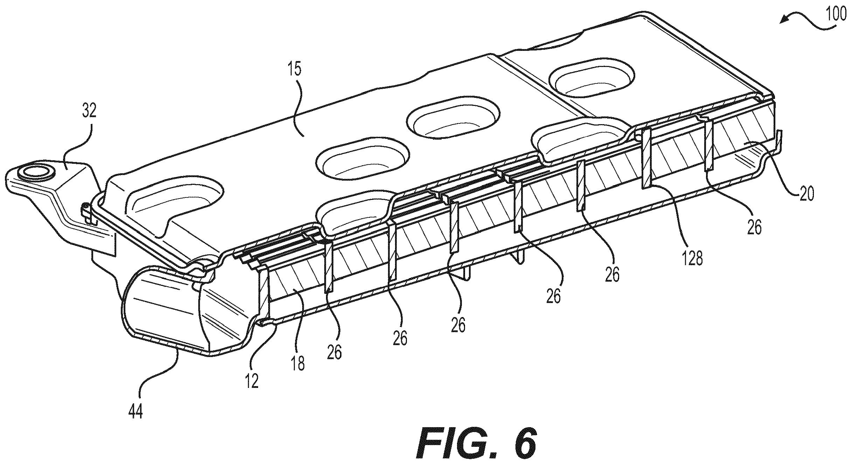

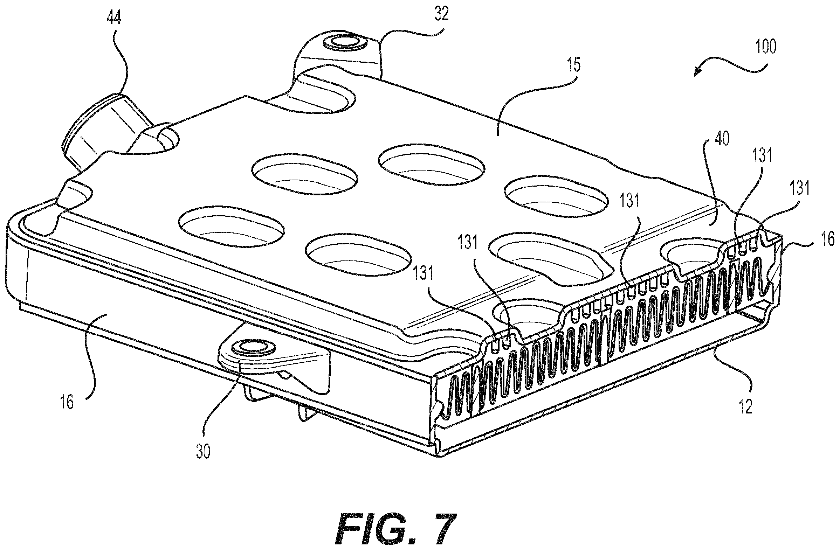

FIG. 4 is an exploded view of a filter according to a second preferred embodiment, 100. FIG. 5 is a top view of the filter pack of FIG. 4. FIG. 6 is a cross-sectional view of the filter of FIG. 4. FIG. 7 is another cross-sectional view of the filter of FIG. 4. In this embodiment, like parts are labeled the same as in the first embodiment and are similar to those of the first embodiment. In this embodiment the "flow control element" is a flow restriction plate that is also passive, or immovable, similar to the element 22 of the first embodiment. The flow control element is integrated with a particular stiffening rib 128. The rib 128 has passive flow control apertures 131. The flow control apertures 131 can be slots or gaps in a the rib 128, which may be for example in the shape of a comb having upwardly projecting fingers 129 that may contact the underside of the upper shell 40. Aside from the fingers 129, fluid can flow over the top of the rib 128, i.e. through apertures 131. In this way the fingers partially define a gap for fluid, which gap is also partially defined by the inner surface of the top shell 40. The amount of flow will depend on the viscosity of the fluid, and be greater with low temperature, high viscosity, fluid in cases where the media 20 is coarser or less efficient than the media 18. Selection of the area of the flow control apertures 131 as defined between the fingers 129 (their width and number) allows a selection of the degree of flow balance between the first media 18 and the second media 20.

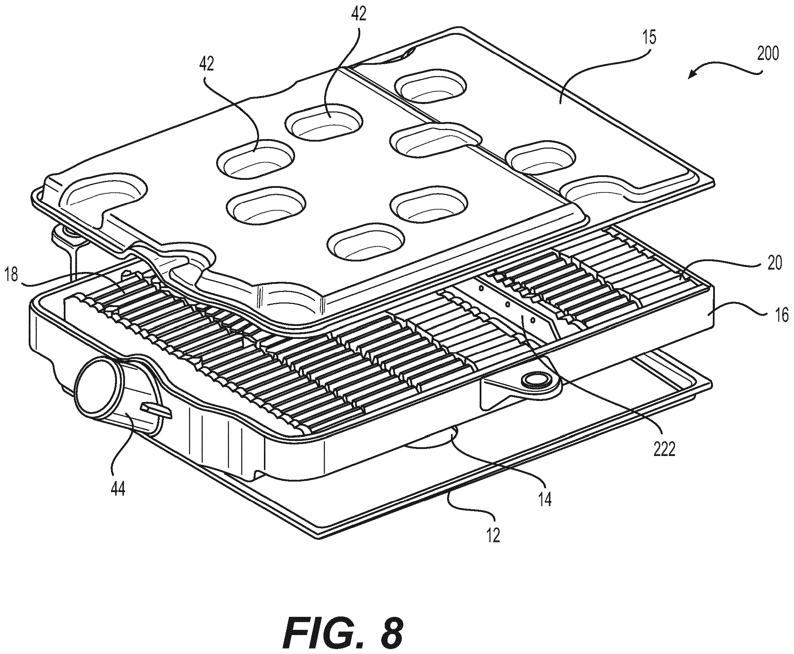

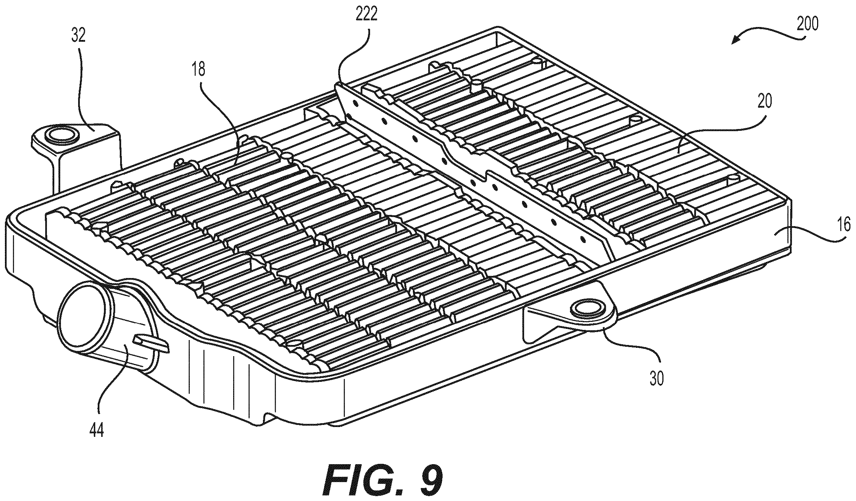

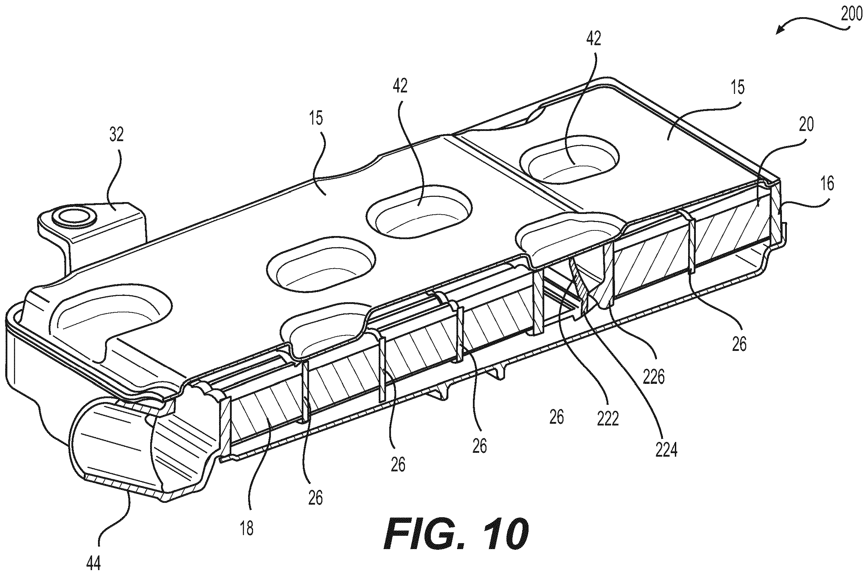

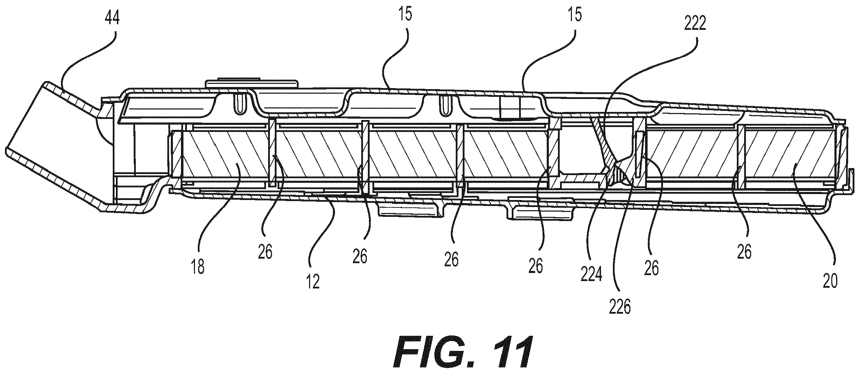

FIG. 8 is an exploded view of a filter according to a third preferred embodiment, 200. FIG. 9 is a top view of the filter pack of FIG. 8. FIG. 10 is a cross-sectional view of the filter of FIG. 8. FIG. 11 is another cross-sectional view of the filter of FIG. 8. In this embodiment, like parts are labeled the same as in the first embodiment and are similar to those of the first embodiment. However, in this embodiment the "flow control element" is a valve 222 that is semiactive in that its upper regions flex or move by deflecting. In this embodiment, the valve 222 is a resilient flexible member which may be elastomeric. The valve 222 may be an elastomeric component with an internal stiffening insert of steel that is overmolded onto the elastomeric material. As seen in FIGS. 10 and 11, the valve can a have lower lobe 224 that seals in a groove in the mounting location 226 of the housing 24. The amount of flow will depend on the viscosity of the fluid, and be greater with low temperature, high viscosity, fluid in cases where the media 20 is coarser or less efficient that the media 18. The flow balance between the first media 18 and the second media 20 is affected by factors such as the stiffness of the material of the valve 222, the cross section shape of the valve 222, and the temperature of the fluid.

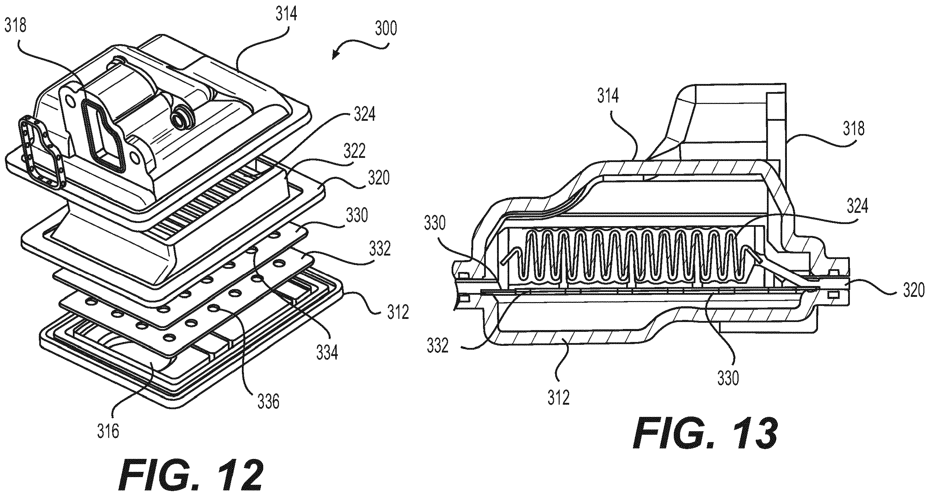

FIG. 12 is an exploded view of a filter according to a fourth preferred embodiment, 300. FIG. 13 is a cross-sectional view of the filter of FIG. 12. The filter 300 has a lower shell 312 and an upper shell 314. The lower shell has a fluid inlet 316, and the upper shell has a fluid outlet 318. A pleat pack 322 has a surrounding housing 320 overmolded onto a media region 324. The media region 324 may have one or more media types, either with or without a valve as described above. The lower shell 312, upper shell 314 and pleat pack 320 are attached together as described above. The filter includes at least one other sheet type media, shown as 330 and 332, which span the housing. In this example the sheet media 330 and 332 are located in the flow path before the pleated media 324. The sheet media 330 and 332 may be of different characteristics from the pleated media 324, and from each other. The sheet media 330 and 332 may also have holes or apertures 334, 336 therethrough, which form a bypass for fluid, and they may be of lower or higher density or efficiency than the pleated media region 324. The apertures 334, 336 can be overlapping or non-overlapping.

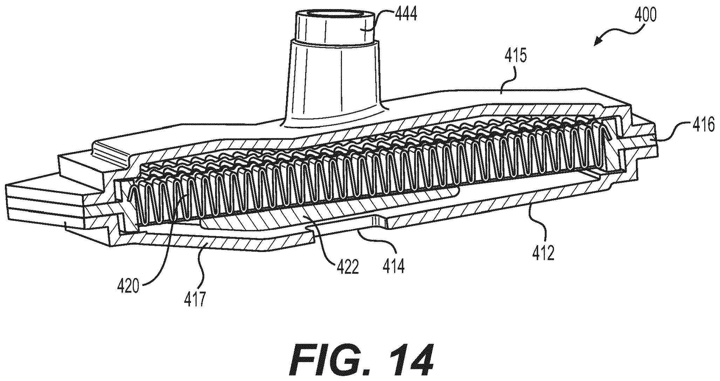

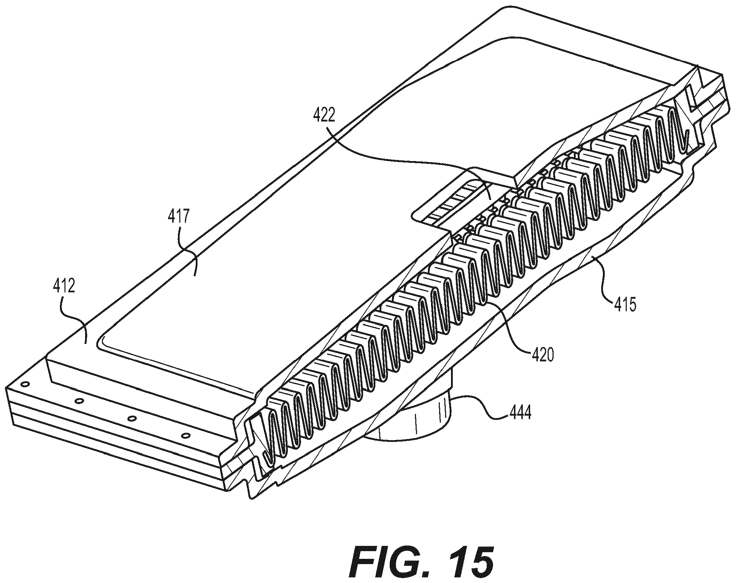

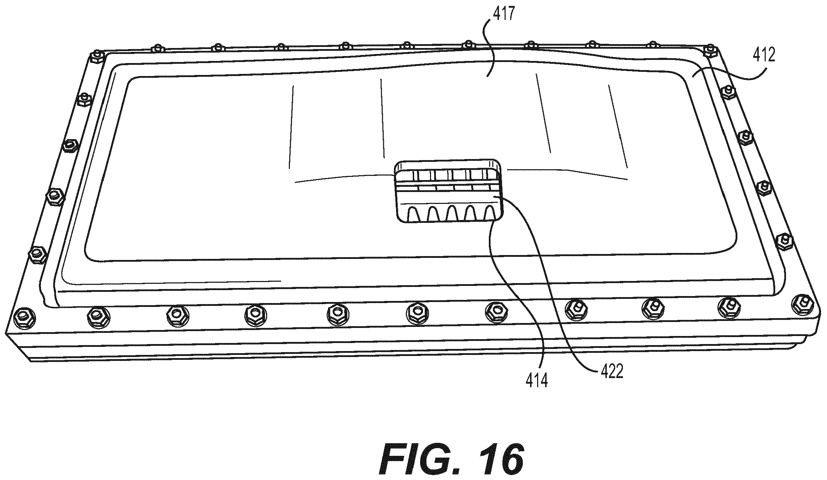

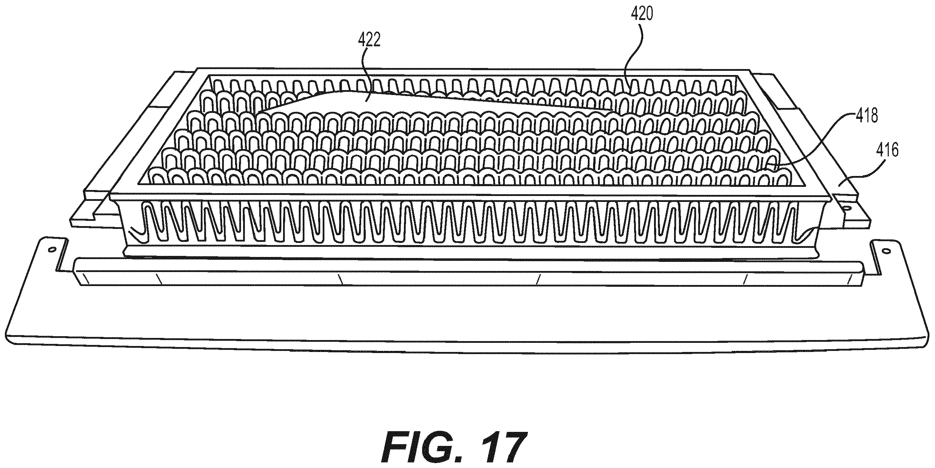

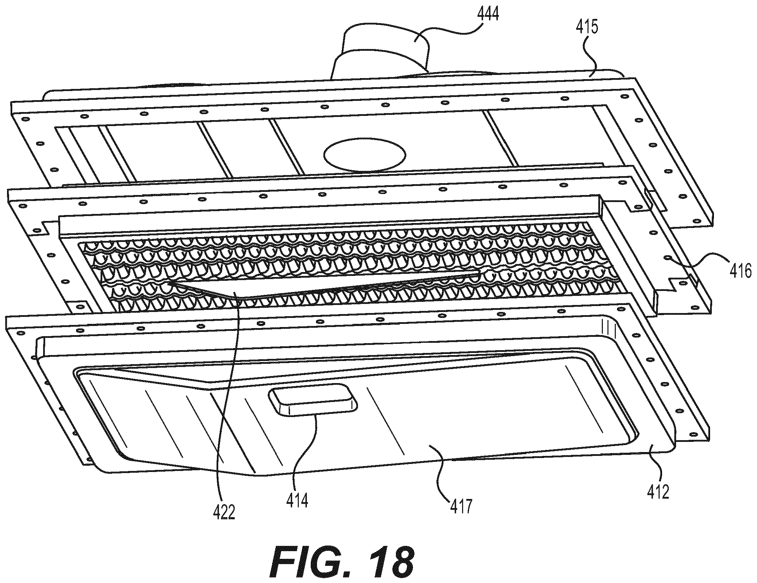

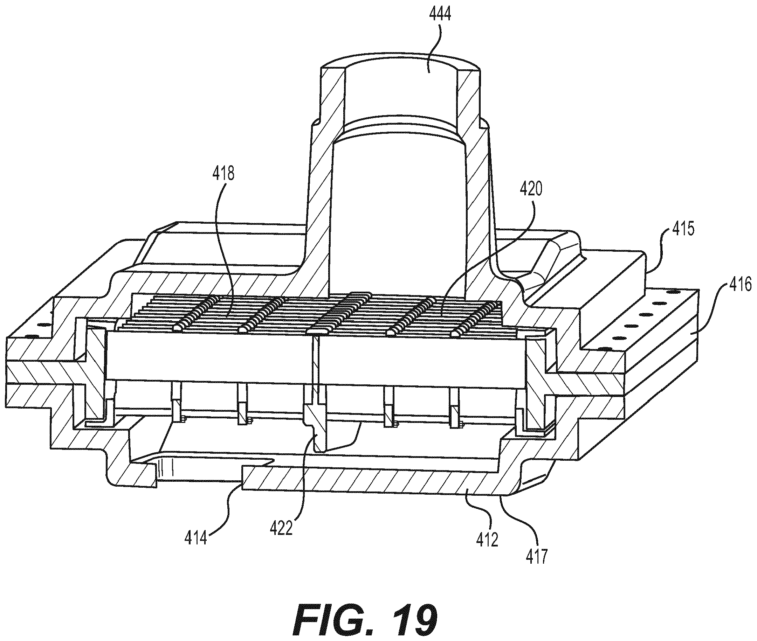

FIG. 14 is a cross-sectional view of a filter 400 according to a fifth preferred embodiment. FIG. 15 is another cross-sectional view of the filter of FIG. 14. FIG. 16 is a bottom view of the filter of FIG. 14. FIG. 17 is a view of a pleat pack used in the filter of FIG. 14. FIG. 18 is an exploded view of the filter of FIG. 14. FIG. 19 is another cross sectional view of the filter of FIG. 14. The filter includes a lower cover 412 having an inlet 414 and an upper cover 415 having an outlet 444. A pleat pack 416 has two media regions 418 and 420. A rib of the pleat pack 416 has a projecting passive flow control element 422 in the form of a blade shape. The blade 422 projects downwardly and is complementary with a V-shaped trough region 417 of the lower cover 412. Depending on the various flow control characteristics of the fluid, described above with respect to the other embodiments, the fluid entering the inlet will have a first flow path through the first media 418, as best illustrated in FIG. 19. This first flow path is fluid that is essentially blocked by the blade 422. A second flow path is formed where fluid flows around the sides of the blade 422 and thus passes around the blade and through the second media 420. The ratio of relative volume through each flow path will vary based on geometry and size of the blade, and on the fluid characteristics described above with respect to the other embodiments, for example the relative media areas, and the relative pressure drops of the medias.

It will be appreciated that some embodiments provide a filter system that provides control of the ratio or proportion of fluid that passes through a first media as compared to the ratio or proportion that passes through a second media. This control phenomenon may dynamically vary depending on factors such as for example, fluid supply flow rate and/or supply pressure and/or viscosity of the fluid and/or temperature of the fluid. Some embodiments provide types of active biased flow control element that deflect, and some other embodiments provide types of passive flow control elements in the form of apertures such as gaps, slots or circular or otherwise shaped holes in a flow control plate or other flow control structure. In some embodiments the flow control element is thermally activated in that change in temperature of fluid affects fluid viscosity which changes the proportion of fluid flow through the respective filter media. Alternatively, or in addition, the flow control element could change its shape, properties, or behavior with temperature, hence effecting flow properties through the media.

From the above description and drawings, it will be appreciated that several embodiments are shown with various types of flow control element disposed in the flow path on the outlet side of the pleat pack, and one embodiment is shown with a type of flow control element on the inlet side. However, it will also be clear that any type of flow control element can be provided on either the inlet side and/or the outlet side flow path. That is, an active element and/or a passive element can be placed on either side of the pleat pack, either towards the inlet side or the outlet side.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

### REFERENCE NUMERALS

- 10: filter
- 12: lower cover (of filter)
- 14: fluid inlet opening (of lower cover)
- 15: upper cover (of filter)
- 16: filter pack
- 18: pleated first media (of filter pack)
- 20: pleated second media (of filter pack)
- 22: flow control element / flow-restriction plate
- 23: hole (of flow control element)
- 24: housing portion (of filter pack)
- 26: rib (of filter pack)
- 30, 32: mounting boss
- 40: upper shell / top shell
- 42: dimple
- 44: fluid outlet
- 100: filter
- 120: pleated second media (of filter pack)
- 122: flow control element / flow-restriction plate
- 128: rib
- 129: finger
- 131: flow control aperture
- 200: filter
- 222: valve / flow control element
- 224: lower lobe (of valve)
- 226: mounting location
- 300: filter
- 312: lower shell (of filter)
- 314: upper shell (of filter)
- 316: fluid inlet
- 318: fluid outlet
- 320: housing
- 322: pleat pack
- 324: media region
- 330: sheet media
- 332: sheet media
- 334: hole / aperture
- 336: hole / aperture
- 400: filter
- 412: lower cover (of filter)
- 414: inlet
- 415: upper cover
- 416: pleat pack
- 417: trough region (of lower cover)
- 418: first media region
- 420: second media region
- 422: flow control element / blade
- 444: outlet

## Claims

1. A fluid filter apparatus (10, 100, 200, 300, 400) comprising:
an upper housing shell (15, 40, 314, 415);
a lower housing shell (12, 312, 412);
a flat pleat pack (16, 322, 416) comprising a peripheral frame (24, 320) with a rectangular shape and a folded pleated media (18, 20, 120, 324, 418, 420), wherein the peripheral frame (24, 320) is at least partially molded over at least some edges of the media (18, 20, 120, 324, 418, 420) to secure the media (18, 20, 120, 324, 418, 420) in the peripheral frame (24, 320) such that pleats of the folded pleated media extend between short sides of the peripheral frame and parallel to long sides of the peripheral frame, wherein the media (18, 20, 120, 324, 418, 420) comprises a first region of media (18, 324, 418) and a second region of media (20, 120, 420), with the two media regions (18, 20, 120, 324, 418, 420) being of different filtration densities from each other, and wherein the upper housing shell (15, 40, 314, 415), the pleat pack (16, 322, 416) and the lower housing shell (12, 312, 412) are attached to each other to form a chamber containing the first region of media and the second region of media (18, 20, 120, 324, 418, 420);
said chamber being divided by said first region of media and said second region of media in a lower chamber and an upper chamber;
an inlet (14, 316, 414) provided on the lower housing shell (12, 312, 412) in fluid communication with the lower chamber;
an outlet (44, 318, 444) formed on one of the upper housing shell (15, 40, 314, 415) and/or the peripheral frame (24, 320) in fluid communication with the upper chamber; and
a flow control means (22, 128, 222, 422) in the upper chamber and arranged in a flow path between the second region of media (20, 120, 420) and the outlet (44, 318, 444), wherein the flow control means is a flexible resilient member (222) having one end fixedly attached to the pleat pack element (16, 322, 416);
wherein:
the flexible resilient member (222) is located on a downstream side of the pleat pack element and between the first region of media and the second region of media and extends transversely between the long sides of the peripheral frame (24, 320);
at least a portion of the flow control means (22, 128, 222, 422) extends vertically towards the upper housing shell dividing the upper chamber into a first upper chamber communicating fluidly with the downstream side of the second region of media and a second upper chamber communicating fluidly with the downstream side of the first region of media and said outlet; and
the flexible resilient member comprises an upper region that flexes or moves by deflection responsive to a viscosity of a fluid flowing through the filter apparatus, so as to control a balance of fluid flow between the first region of media and the second region of media.

2. The fluid filter apparatus (10, 100, 200, 300, 400) of claim 1, wherein the flow control means (22, 128, 222, 422) is mounted to the pleat pack (16, 322, 416).

3. A fluid filter apparatus (10, 100, 200, 300, 400) according to any of the preceding claims, wherein the flow control means (22, 128, 222, 422) is integral with a portion of the pleat pack (16, 322, 416).

4. A fluid filter apparatus (300) according to any of the preceding claims, wherein:
the pleat pack further comprises a housing portion comprising a mounting location for the flexible resilient member, the mounting location comprising a groove;
the flexible resilient member comprises a lower lobe that seals in the groove.

5. A fluid filter apparatus (300) according to claim 4, wherein the flexible resilient member is an elastomeric component with an internal stiffening insert.

6. A fluid filter apparatus (10, 100, 200, 300, 400) according to any of the preceding claims, wherein the pleat pack further comprises one or more ribs (26) extending transversely between the long sides of the peripheral frame.

7. A fluid filter apparatus (10, 100, 200, 300, 400) according to claim 1, wherein the upper housing and the lower housing are each joined to the peripheral frame by one or more of vibration welding, laser welding, bonding, ultrasonic welding or infrared welding.

8. A fluid filter apparatus (10, 100, 200, 300, 400) according to any of claims 1 to 7, wherein the outlet (44, 318, 444) is formed on the peripheral frame (24, 320).

9. A fluid filter apparatus (10, 100, 200, 300, 400) according to any of claims 1 to 7, wherein the outlet (44, 318, 444) is formed on the upper housing shell (15, 40, 314, 415).

## Patentansprüche

1. Fluidfiltervorrichtung (10, 100, 200, 300, 400), die Folgendes umfasst:
eine obere Gehäusehülle (15, 40, 314, 415);
eine untere Gehäusehülle (12, 312, 412);
einen flachen Faltenpack (16, 322, 416), der einen Umfangsrahmen (24, 320) mit einer rechteckigen Gestalt und zusammengelegte Faltenmedien (18, 20, 120, 324, 418, 420) umfasst, wobei der Umfangsrahmen (24, 320) wenigstens teilweise über wenigstens einige Kanten der Medien (18, 20, 120, 324, 418, 420) geformt ist, um die Medien (18, 20, 120, 324, 418, 420) in dem Umfangsrahmen (24, 320) derart zu sichern, dass sich Falten der zusammengelegten Faltenmedien zwischen kurzen Seiten des Umfangsrahmens und parallel zu langen Seiten des Umfangsrahmens erstrecken, wobei die Medien (18, 20, 120, 324, 418, 420) einen ersten Bereich von Medien (18, 324, 418) und einem zweiten Bereich von Medien (20, 120, 420) umfassen, wobei die zwei Medienbereiche (18, 20, 120, 324, 418, 420) voneinander unterschiedliche Filtrationsdichten haben und wobei die obere Gehäusehülle (15, 40, 314, 415), der Faltenpack (16, 322, 416) und die untere Gehäusehülle (12, 312, 412) aneinander befestigt sind, um eine Kammer auszubilden, die den ersten Bereich von Medien und den zweiten Bereich von Medien (18, 20, 120, 324, 418, 420) enthält;
wobei die Kammer durch den ersten Bereich von Medien und den zweiten Bereich von Medien in eine untere Kammer und eine obere Kammer geteilt ist;
einen Einlass (14, 316, 414), der an der unteren Gehäusehülle (12, 312, 412) in Fluidverbindung mit der unteren Kammer bereitgestellt ist;
einen Auslass (44, 318, 444), der an der oberen Gehäusehülle (15, 40, 314, 415) oder dem Umfangsrahmen (24, 320) in Fluidverbindung mit der oberen Kammer ausgebildet ist; und
ein Strömungssteuermittel (22, 128, 222, 422) in der oberen Kammer und in einem Strömungsweg zwischen dem zweiten Bereich von Medien (20, 120, 420) und dem Auslass (44, 318, 444) angeordnet, wobei das Strömungssteuermittel ein flexibles elastisches Element (222) ist, das ein Ende aufweist, das an dem Faltenpackelement (16, 322, 416) fest befestigt ist;
wobei:
sich das flexible elastische Element (222) an einer stromabwärts gelegenen Seite des Faltenpackelements und zwischen dem ersten Bereich von Medien und dem zweiten Bereich von Medien befindet und sich quer zwischen den langen Seiten des Umfangsrahmens (24, 320) erstreckt;
sich wenigstens ein Abschnitt des Strömungssteuermittels (22, 128, 222, 422) vertikal in Richtung der oberen Gehäusehülle erstreckt und die obere Kammer in eine erste obere Kammer, die mit der stromabwärts gelegenen Seite des zweiten Bereichs von Medien fluidisch verbunden ist, und eine zweite obere Kammer, die mit der stromabwärts gelegenen Seite des ersten Bereichs von Medien und dem Auslass fluidisch verbunden ist, teilt; und
das flexible elastische Element einen oberen Bereich umfasst, der sich durch eine Ablenkung reagierend auf eine Viskosität eines Fluids, das durch die Filtervorrichtung strömt, biegt oder bewegt, um ein Gleichgewicht der Fluidströmung zwischen dem ersten Bereich von Medien und dem zweiten Bereich von Medien zu steuern.

2. Fluidfiltervorrichtung (10, 100, 200, 300, 400) nach Anspruch 1, wobei das Strömungssteuermittel (22, 128, 222, 422) an dem Faltenpack (16, 322, 416) montiert ist.

3. Fluidfiltervorrichtung (10, 100, 200, 300, 400) nach einem der vorhergehenden Ansprüche, wobei das Strömungssteuermittel (22, 128, 222, 422) in einen Abschnitt des Faltenpacks (16, 322, 416) integriert ist.

4. Fluidfiltervorrichtung (300) nach einem der vorhergehenden Ansprüche, wobei:
das Faltenpaket ferner einen Gehäuseabschnitt umfasst, der einen Montageort für das flexible elastische Element umfasst, wobei der Montageort eine Nut umfasst;
das flexible elastische Element einen unteren Nocken umfasst, der in der Nut abdichtet.

5. Fluidfiltervorrichtung (300) nach Anspruch 4, wobei das flexible elastische Element eine elastomerische Komponente mit einem inneren Versteifungseinsatz ist.

6. Fluidfiltervorrichtung (10, 100, 200, 300, 400) nach einem der vorhergehenden Ansprüche, wobei der Faltenpack ferner eine oder mehrere Rippen (26) umfasst, die sich quer zwischen den langen Seiten des Umfangsrahmens erstrecken.

7. Fluidfiltervorrichtung (10, 100, 200, 300, 400) nach Anspruch 1, wobei das obere Gehäuse und das untere Gehäuse jeweils durch Vibrationsschweißen, Laserschweißen, Bonden, Ultraschallschweißen und/oder Infrarotschweißen mit dem Umfangsrahmen zusammengefügt sind.

8. Fluidfiltervorrichtung (10, 100, 200, 300, 400) nach einem der Ansprüche 1 bis 7, wobei der Auslass (44, 318, 444) an dem Umfangsrahmen (24, 320) ausgebildet ist.

9. Fluidfiltervorrichtung (10, 100, 200, 300, 400) nach einem der Ansprüche 1 bis 7, wobei der Auslass (44, 318, 444) an der oberen Gehäusehülle (15, 40, 314, 415) ausgebildet ist.

## Revendications

1. Appareil de type filtre pour fluide (10, 100, 200, 300, 400) comprenant :
une coque de boîtier supérieure (15, 40, 314, 415) ;
une coque de boîtier inférieure (12, 312, 412) ;
un paquet de plis plat (16, 322, 416) comprenant un cadre périphérique (24, 320) de forme rectangulaire et un milieu plissé plié (18, 20, 120, 324, 418, 420), dans lequel le cadre périphérique (24, 320) est au moins partiellement moulé sur au moins certains bords du milieu (18, 20, 120, 324, 418, 420) pour fixer le milieu (18, 20, 120, 324, 418, 420) dans le cadre périphérique (24, 320) de telle sorte que les plis du milieu plissé plié s'étendent entre les côtés courts du cadre périphérique et parallèlement aux côtés longs du cadre périphérique, dans lequel le milieu (18, 20, 120, 324, 418, 420) comprend une première zone de milieu (18, 324, 418) et une seconde zone de milieu (20, 120, 420), les deux zones de milieu (18, 20, 120, 324, 418, 420) ayant des densités de filtration différentes l'une de l'autre, et dans lequel la coque de boîtier supérieure (15, 40, 314, 415), le paquet de plis (16, 322, 416) et la coque de boîtier inférieure (12, 312, 412) sont fixés les uns aux autres pour former une chambre contenant le première zone de milieu et la seconde zone de milieu (18, 20, 120, 324, 418, 420) ;
ladite chambre étant divisée par ladite première zone de milieu et ladite seconde zone de milieu dans une chambre inférieure et une chambre supérieure ;
une entrée (14, 316, 414) prévue sur la coque inférieure du boîtier (12, 312, 412) en communication fluidique avec la chambre inférieure ;
une sortie (44, 318, 444) formée sur l'un parmi la coque supérieure du boîtier (15, 40, 314, 415) et/ou le cadre périphérique (24, 320) en communication fluidique avec la chambre supérieure ; et
un moyen de régulation d'écoulement (22, 128, 222, 422) dans la chambre supérieure et disposé dans une voie d'écoulement entre la seconde zone de milieu (20, 120, 420) et la sortie (44, 318, 444), dans lequel le moyen de régulation d'écoulement est un élément élastique flexible (222) ayant une extrémité attachée de manière fixe à l'élément de paquet de plis (16, 322, 416) ;
dans lequel :
l'élément élastique flexible (222) est situé sur un côté en aval de l'élément de paquet de plis et entre la première zone de milieu et la seconde zone de milieu et s'étend de manière transversale entre les côtés longs du cadre périphérique (24, 320) ;
au moins une partie du moyen de régulation d'écoulement (22, 128, 222, 422) s'étend verticalement vers la coque supérieure du boîtier divisant la chambre supérieure en une première chambre supérieure communiquant fluidiquement avec le côté aval de la seconde zone de milieu et une seconde chambre supérieure communiquant fluidiquement avec le côté aval de la première zone de milieu et de ladite sortie ; et
l'élément élastique flexible comprend une zone supérieure qui fléchit ou se déplace par déviation en réponse à une viscosité d'un fluide s'écoulant à travers l'appareil de type filtre, de manière à réguler un équilibre d'écoulement de fluide entre la première zone de milieu et la seconde zone de milieu.

2. Appareil de type filtre pour fluide (10, 100, 200, 300, 400) selon la revendication 1, dans lequel le moyen de régulation d'écoulement (22, 128, 222, 422) est monté sur le paquet de plis (16, 322, 416).

3. Appareil de type filtre pour fluide (10, 100, 200, 300, 400) selon l'une quelconque des revendications précédentes, dans lequel le moyen de régulation d'écoulement (22, 128, 222, 422) est solidaire d'une partie du paquet de plis (16, 322, 416).

4. Appareil de type filtre pour fluide (300) selon l'une quelconque des revendications précédentes, dans lequel :
le paquet de plis comprend en outre une partie de boîtier comprenant un emplacement de montage pour l'élément élastique flexible, l'emplacement de montage comprenant une rainure ;
l'élément élastique flexible comprend un lobe inférieur qui se scelle dans la rainure.

5. Appareil de type filtre pour fluide (300) selon la revendication 4, dans lequel l'élément élastique flexible est un composant élastomère avec un insert de rigidification interne.

6. Appareil de type filtre pour fluide (10, 100, 200, 300, 400) selon l'une quelconque des revendications précédentes, dans lequel le paquet de plis comprend en outre une ou plusieurs nervures (26) s'étendant de manière transversale entre les côtés longs du cadre périphérique.

7. Appareil de type filtre pour fluide (10, 100, 200, 300, 400) selon la revendication 1, dans lequel le boîtier supérieur et le boîtier inférieur sont chacun reliés au cadre périphérique par une ou plusieurs des techniques de soudage suivantes : soudage par friction vibration, soudage par laser, collage, soudage par ultrasons ou soudage par infrarouge.

8. Appareil de type filtre pour fluide (10, 100, 200, 300, 400) selon l'une quelconque des revendications 1 à 7, dans lequel la sortie (44, 318, 444) est formée sur le cadre périphérique (24, 320).

9. Appareil de type filtre pour fluide (10, 100, 200, 300, 400) selon l'une quelconque des revendications 1 à 7, dans lequel la sortie (44, 318, 444) est formée sur la coque supérieure du boîtier (15, 40, 314, 415).
